# EUROPEAN PATENT APPLICATION

(11) **EP 4 632 034 A1**
(43) Date of publication of application: **15.10.2025**
(21) Application number: 25170197.5
(22) Date of filing: 11.04.2025
(51) Int. Cl.: C09K 8/035, C09K 8/54

(54) **CORROSION INHIBITOR AND RELATED METHODS OF INHIBITING CORROSION**

(30) Priority: 12.04.2024 US 202418633610
(71) Applicant: Services Pétroliers Schlumberger, 75007 Paris (FR); Schlumberger Technology B.V., 2514 JG The Hague (NL)
(72) Inventor: BARMATOV, Evgeny Borisovich, Cambridge, CB3 0EL (GB)
(74) Representative: Schlumberger Intellectual Property Department

(57) **Abstract**

An environmentally-friendly corrosion inhibitor composition is provided that includes a reaction product of a lower molecular weight component and a higher molecular weight component. The lower molecular weight component includes at least one aldehyde or ketone or mixture thereof. The higher molecular weight component has at least one functional side group that reacts with the at least one aldehyde or ketone or mixture thereof such that the corrosion inhibiting composition is stable in bulk form and in aqueous fluids at near-neutral pH conditions. The at least one aldehyde or ketone or mixture thereof is regenerated and separated from the higher molecular weight component when the corrosion inhibiting composition is part of an aqueous acidic fluid having a pH less than or equal to 1. Other aspects, including application of the corrosion inhibitor composition in treatment fluids for downhole applications, are described and claimed.

## Description

### FIELD

The present disclosure relates to corrosion inhibiting compositions and related methods of inhibiting the corrosion of metal surfaces caused by acidic liquids.

### BACKGROUND

Subterranean hydrocarbon-containing formations accessed by wells are often treated with aqueous acidic fluids to stimulate the production of hydrocarbons therefrom. One such treatment generally referred to as "acidizing" or "matrix-acidizing" involves the transport of an aqueous acidic fluid through a well that accesses a subterranean formation for introduction of the aqueous acidic fluid into the formation under pressure so that the aqueous acidic fluid flows through the pore spaces of the formation. The aqueous acidic fluid reacts with acid soluble materials contained in the formation thereby increasing the size of the pore spaces and increasing the permeability of the formation. The matrix-acidizing is typically intended to improve or restore the permeability of the region near the wellbore (for example, in a radius of 8 to 24 inches from the wellbore wall). This increase in permeability will decrease the pressure drop associated with the production or the injection of fluids by enlargement of pore throats in the formation or by removal of formation permeability damage created by drilling or completion fluids.

Another production stimulation treatment known as "fracture-acidizing" involves forming one or more fractures in the formation by hydraulic fracturing in which acid-etched channels serve as very-high-conductivity flow paths along the face of the fracture(s). The hydraulic fracturing involves the transport of an aqueous acidic fluid through a well that accesses the formation for injecting the aqueous acidic fluid into the formation under high pressure conditions that breaks the formation rock and produces one or more cracks along which the aqueous acidic fluid flows. The aqueous acidic fluid reacts with the formation rock to remove the formation rock and leave channels along the face of the crack(s).

The matrix-acidizing and the fracture-acidizing treatments typically employ an aqueous acidic fluid that contains, for example, 15% to 28% hydrochloric acid, which can cause corrosion of metal surfaces in pumps and tubular goods and equipment used to introduce the aqueous acidic fluid into a formation to be treated as well as corrosion of the metal surfaces (e.g., tubulars or casing) of the well(s) that access the formation. The expense associated with repairing or replacing corrosion damaged tubular goods and equipment can be high. The corrosion of tubular goods and downhole equipment and the wells can be increased by the elevated temperatures encountered in a deep formation, and the corrosion results in at least the partial neutralization of the aqueous acidic fluid before it reacts with acid-soluble materials in the formation.

Oilfield production systems also include metal surfaces that can be exposed to aqueous acidic fluids associated with well cleaning and multiphase production streams of oil and gas wells. Such aqueous acidic fluids can cause corrosion of the metal surfaces.

A conventional approach to the protection of such metal surfaces against corrosion by an aqueous acidic fluid is to contact the metal surfaces with a corrosion inhibitor. For example, when conveying an aqueous acidic fluid through steel tubing, it is conventional to add a corrosion inhibitor to the fluid as mentioned in many documents including for example US patent 5120471.

Organic film-forming corrosion inhibitors are used in commercial formulations that inhibit the corrosion of carbon steel and high alloys in the presence of strong mineral acids. See M. Finšgar, J. Jackson, "Application of corrosion inhibitors for steels in acidic media for the oil and gas industry: A review," Corrosion Science 86 (2014) 17-41; and E. Barmatov, J. Geddes, T. Hughes, M. Nagl, "Research on corrosion inhibitors for acid stimulation," NACE, 2012, pp. C2012-0001573. For example, commercial corrosion inhibitor formulations frequently contains acetylenic alcohols, an alkenyl ketone or alkenyl aldehyde containing an olefinic double bond conjugated with the double bond of a ketone group.

Many commercial corrosion inhibitors used in matrix-acidizing treatments are based on the Mannich condensation reactions. This process uses formaldehyde, an amine, and a ketone to produce a "Mannich base." Because this reaction rarely goes to completion, some toxic formaldehyde will remain in the reaction product that is formulated as the commercial inhibitor.

Good corrosion inhibition efficiencies can be obtained with so-called polymerizable corrosion inhibitors. Acetylenic alcohols, α,β-unsaturated aldehydes, and α-alkenylphenones are typical representatives of polymerizable corrosion inhibitors.

U.S. Patent Nos. 4734259 and 5120471 describe a corrosion inhibitor composed of phenyl ketone, phenyl ketone with a quaternary salt of a nitrogen-containing heterocyclic aromatic compound with a quaternary salt of a nitrogen-containing heterocyclic aromatic compound and an acid soluble metal from antimonium or bismuth (such as Bi₂O₃, BiI₃) salts. Based on this approach, trans-cinnamaldehyde was proposed as an ingredient in low toxicity inhibitor formulations. A low-toxicity commercial inhibitor formulation based on *trans-*cinnamaldehyde was developed for use in HCl-base cleaning formulations as described in W.W. Frenier, paper 96154, presented at the 51st NACE International Corrosion Forum, Denver, CO, March 1996.

US Patent No. 6399547 describes the use of aliphatic aldehydes in combination with an aromatic aldehyde, wherein the aromatic aldehyde is a substituted cinnamaldehyde.

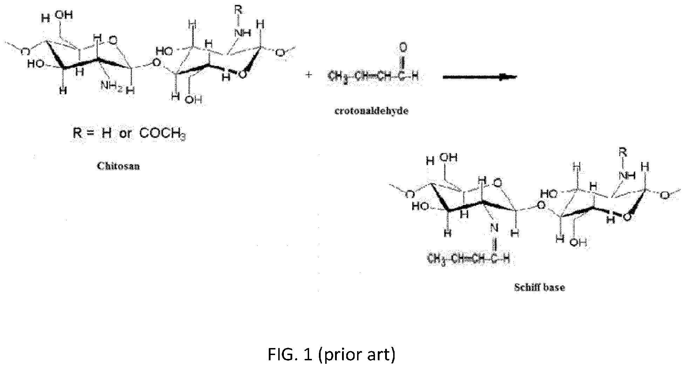

R. Mohamed, A.M. Fekry, "Antimicrobial and anticorrosive activity of adsorbents based on chitosan Schiff's base," Int. J. Electrochem. Sci., 2011, 2488-2508 describes synthesis, swelling behavior (in aqueous solution at pH 4, 7 and 9), antimicrobial and corrosion activity of *adsorbents* based on water insoluble chitosan Schiff's base polymer. The water insoluble adsorbents was prepared through reaction of chitosan with crotonaldehyde as shown in FIG. 1. The corrosion behavior was studied in aerated 3% NaCl solution in the presence of magnesium alloy AZ91E coupons coated with polymer Schiff base film. The value of impedance |Z| were found to increase with increasing immersion time suggesting that surface film remains stable for 4h. This effect is due to the coating absorbing water and swelling slightly, closing off pores that may be formed on the surface due to the aggressiveness of the medium or pores becoming clogged with corrosion product.

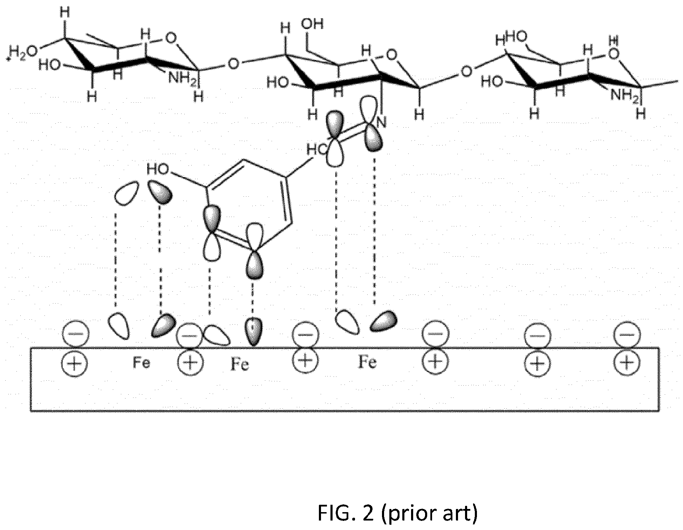

R. Menaka, S. Subhashini, "Chitosan Schiff base as eco-friendly inhibitor for mild steel corrosion in 1 M HCl," Journal of Adhesion Science and Technology, 2016, 1622-1640 describes the corrosion performance of a poly-(Schiff base) composition formed from chitosan and salicylaldehyde. The Schiff base polymer was acid soluble and inhibited corrosion to carbon steel in 1M HCl. The mechanism for the adsorption of the corrosion inhibitor on the metal surface is shown in FIG. 2. The authors assumed that the cationic form of chitosan and chitosan Schiff based polymer may adsorb on the cathodic sites of metal. On the other hand, -C=N and -OH groups have lone pair of electrons and can be adsorbed on the anodic sites of the metal surface through chemical interaction with the empty d orbitals of the metal atom. Thus, the chitosan Schiff based polymer inhibits corrosion of the metal surface by chemical adsorption by forming coordinated bonds between the active sites and vacant d-orbitals of metal substrate.

As mentioned previously, organic film-forming corrosion inhibitors can be used in commercial formulations that inhibit the corrosion of carbon steel and high alloys in the presence of strong mineral acids. However, it should be noted that the use of most organic film-forming corrosion inhibitors can be problematic due to environmental unacceptability based on three factors, i.e. marine toxicity, bioaccumulation and biodegradation. Specifically, these three factors can make them less acceptable for use in highly regulated offshore environments, such as the North Sea and Northeast Atlantic.

For example, commercial acid inhibitor formulations frequently contain acetylenic inhibitors such as propargyl alcohol, ethyloctanol, aldehydes, etc. While these materials produce excellent corrosion inhibitor formulations, they can be toxic to mammals, readily absorbed through the skin and cause problems of handling and waste disposal and produce toxic vapors. Furthermore, human exposure to aldehydes represents a significant toxicological concern. Despite the potential risks of aldehyde exposure, the toxic mechanisms are only understood in general terms, i.e., formation of covalent adducts with nucleophilic residues on macromolecules. M. LoPachin, T. Gavi, "Molecular mechanisms of aldehyde toxicity: a chemical perspective," Chem. Res. Toxicol., 2014, 1081-1091 indicates that short chain aldehydes and longer chain saturated alkanals are hard electrophiles that cause toxicity by forming adducts with hard biological nucleophiles, e.g., primary nitrogen groups on lysine residues. In contrast, α,β-unsaturated carbonyl derivatives, alkenals, and the α-oxoaldehydes are soft electrophiles that preferentially react with soft nucleophilic thiolate groups on cysteine residues. D.R. Seiner, J.N. LaButti, K.S. Gates, "Kinetics and mechanism of protein tyrosine phosphatase B inactivation by acrolein, Chem. Res. Toxicol., 2007, 1315-1320" demonstrated that acrolein and a series of structurally related unsaturated aldehydes inhibited protein tyrosine phosphatase 1B (PTP1B) activity via covalent modification of a specific cysteine residue (Cys215). The order of potency was as follows: CH₂=CHCHO (acrolein) >> CH₃CH=CHCHO (crotonaldehyde) > (CH₃)₂C=CHCHO (3-methyl-2-butenal) ≈ CH₃CH₂CHO (propanal).

There remains a continuing need for improved methods and metal corrosion inhibiting compositions which provide corrosion inhibitor formulations that can meet industry standards for corrosion inhibitor performance and which have less environmental impact.

### SUMMARY

This summary is provided to introduce a selection of concepts that are further described below in the detailed description. This summary is not intended to identify key or essential features of the claimed subject matter, nor is it intended to be used as an aid in limiting the scope of the claimed subject matter.

In general, the present disclosure is directed to a corrosion inhibitor composition that includes a reaction product of a lower molecular weight component and a higher molecular weight component. The lower molecular weight component includes at least one aldehyde or ketone or mixture thereof. The higher molecular weight component has at least one functional side group that reacts with the at least one aldehyde or ketone or mixture thereof such that the corrosion inhibiting composition is stable in bulk form and in aqueous fluids at near-neutral pH conditions. The at least one aldehyde or ketone or mixture thereof is regenerated and separated from the higher molecular weight component when the corrosion inhibiting composition is part of an aqueous acidic fluid having a pH less than or equal to 1.

In embodiments, the lower molecular weight component can include at least one alpha, beta-unsaturated aldehyde or at least one alpha, beta-unsaturated ketone or mixture thereof.

In embodiments, the at least one functional side group of the higher molecular weight component can be selected from the group consisting of hydroxyl group, primary amine group, secondary amine group, primary amide group, or secondary amide group.

In embodiments, the near-neutral pH conditions can be pH conditions in the range of 6.0 to 8.0.

In embodiments, the at least one aldehyde or ketone or mixture thereof can be regenerated and separated from the higher molecular weight component by acid catalyzed hydrolysis of the higher molecular weight component.

In embodiments, the at least one aldehyde or ketone or mixture thereof can be releasable into the aqueous acidic fluid such that the at least one aldehyde or ketone or mixture thereof functions chemically to inhibit corrosion on metal surfaces contacted by the aqueous acidic fluid.

In embodiments, the higher molecular weight component can have a molecular weight between 500 and 10⁶ (preferably between 500 and 10000) and include backbones that can be either linear or ladder or cyclic or branched.

In embodiments, the higher molecular weight component can include a water-soluble polymer or oligomer.

In embodiments, the higher molecular weight component can include at least one dendrimer, such as poly(amido amine) (PAMAM), poly(propylene imine) (PPI), or combinations thereof.

In embodiments, the higher molecular weight component can include at least one trimer, such as 2-[bis(2-aminoethyl)amino]ethanol, thriethanolamine, or combinations thereof.

In embodiments, the corrosion inhibiting composition can further include a solvent, such as methanol, ethanol, isopropanol, 2-butoxyethanol, di(propylene glycol) methyl ether, di(propylene glycol)propyl ether, or combinations thereof.

In embodiments, the higher molecular weight component can include poly(ethylenimine).

In embodiments, the lower molecular weight component can include cinnamaldehyde, such as trans-cinnamaldehyde.

In another aspect, the present disclosure is directed to a method of forming a treatment fluid this is transported through a well, which involves adding a corrosion inhibitor composition as described herein to an aqueous acidic fluid having a pH less than or equal to 1. In embodiments, the corrosion inhibitor composition can include a reaction product of a lower molecular weight component and a higher molecular weight component. The lower molecular weight component includes at least one aldehyde or ketone or mixture thereof. The higher molecular weight component has at least one functional side group that reacts with the at least one aldehyde or ketone or mixture thereof such that the corrosion inhibiting composition is stable in bulk form and in aqueous fluids at near-neutral pH conditions. The at least one aldehyde or ketone or mixture thereof is regenerated and separated from the higher molecular weight component when the corrosion inhibiting composition is added to the aqueous acidic fluid having a pH less than or equal to 1.

In yet another aspect, the present disclosure is directed to a method of inhibiting corrosion in a well that transports aqueous acidic fluid, which involves forming or providing a treatment fluid that combines a corrosion inhibitor composition as described herein and an aqueous acidic fluid having a pH less than or equal to 1. The treatment fluid can be introduced into the well, for example, to treat the subterranean formation that is accessed by the well. The corrosion inhibitor composition can act to inhibit corrosion of metal surfaces contacted by the treatment fluid.

In embodiments, the well can be an oil well, a gas well, a water well, or a geothermal well.

In embodiments, the corrosion inhibitor compositions and related methods as described and/or claimed herein can provide an improved environmental footprint due to a lack of "free" toxic (or environmentally hazardous) aldehydes and/or ketones in the corrosion inhibitor composition. More specifically, the aldehyde and/or ketone molecules are chemically attached to the higher molecular weight component in near-neutral pH conditions (e.g., at pH conditions in the range of 6.0 to 8.0). Moreover, hydrolytic stability of the corrosion inhibitor compositions in near-neutral pH conditions (e.g., at pH conditions in the range of 6.0 to 8.0) can also add to the improved environmental footprint. Furthermore, the corrosion inhibitor compositions and related method as described and/or claimed herein can also exhibit reduced toxicity and volatility that is achieved through the formation of polymer intermediates, which can reduce the risk of hazardous substances to personnel during storage and formulation preparation in the field.

### BRIEF DESCRIPTION OF THE DRAWINGS

The subject disclosure is further described in the detailed description which follows, in reference to the noted plurality of drawings by way of non-limiting examples of the subject disclosure, in which like reference numerals represent similar parts throughout the several views of the drawings, and wherein:
FIG. 1 (PRIOR ART) is a schematic diagram that illustrates a water insoluble Schiff base adsorbent prepared through reaction of chitosan with crotonaldehyde;
FIG. 2 (PRIOR ART) is a schematic diagram that illustrates adsorption of a poly-(Schiff base) composition on a steel surface. The composition was formed by the chemical reaction of chitosan and salicylaldehyde;
FIG. 3 is a schematic diagram that illustrates the chemical reaction of primary and secondary amines with aldehydes and ketones. In the figure, the amine component is represented by a higher molecular weight component with a primary and/or secondary amine functional side group, and the aldehyde or ketone is represented by a lower molecular weight component;
FIG. 4 is a schematic diagram that illustrates the 1,2 and 1,4 addition reactions of primary and secondary amines with α,β-unsaturated carbonyls. In the figure, the amine component is represented by a higher molecular weight component with a primary and/or secondary amine functional side group, and the aldehyde or ketone is represented by a lower molecular weight component;
FIG. 5 is a schematic diagram that illustrates the chemical reaction of aldehydes and ketones with alcohols. In the figure, the alcohol component is represented by a higher molecular weight component with a primary and/or secondary amine functional side group, and the aldehyde or ketone is represented by a lower molecular weight component;
FIG. 6 is a schematic diagram of the structure of the poly(amido amine) (PAMAM) dendrimer;
FIG. 7 is a schematic diagram of the structure of the poly(propylene imine) (PPI) dendrimer;
FIG. 8 is a schematic diagram of the structure of the thriethanolamine trimer;
FIG. 9 is a schematic diagram of the structure of the 2-[bis(2-aminoethyl)amino]ethanol trimer;
FIG. 10A is a schematic diagram that illustrates the chemical reaction of a higher molecular weight component (e.g., poly(ethylenimine)) having a primary amine functional side group with trans-cinnamaldehyde in ethanol (EtOH);
FIG. 10B is a schematic diagram that illustrates regeneration of cinnamaldehyde (lower molecular weight component) and separation of cinnamaldehyde from the higher molecular weight component when the reaction product of FIG. 10A is introduced into an aqueous acidic fluid having a pH less than or equal to one;
FIG. 11 are plots of ¹H NMR data of the trans-cinnamaldehyde together with the polymeric reaction product of FIG. 10A in both an aqueous solution of ethanol and DI water (10% by weight D₂0) solution at near neutral pH and an aqueous solution of ethanol and DI water (10% by weight D₂0) at a pH of 1; and
FIG. 12 are plots of FTIR spectroscopy data of trans-cinnamaldehyde and poly(ethylenimine)-2000 together with the polymeric reaction product of FIG. 10A.

### DETAILED DESCRIPTION

The particulars shown herein are by way of example and for purposes of illustrative discussion of the embodiments of the subject disclosure only and are presented in the cause of providing what is believed to be the most useful and readily understood description of the principles and conceptual aspects of the subject disclosure. In this regard, no attempt is made to show structural details in more detail than is necessary for the fundamental understanding of the subject disclosure, the description taken with the drawings making apparent to those skilled in the art how the several forms of the subject disclosure may be embodied in practice. Furthermore, like reference numbers and designations in the various drawings indicate like elements.

In accordance with the present disclosure, a corrosion inhibiting composition can include a reaction product of a lower molecular weight component and a higher molecular weight component. The lower molecular weight component includes one or more aldehydes or ketones or mixtures thereof. In embodiments, the lower molecular weight component includes one or more alpha, beta-unsaturated aldehydes or one or more alpha, beta-unsaturated ketones or mixtures thereof. The higher molecular weight component has one or more functional side groups (such as hydroxyl groups or primary or secondary amine groups or amide groups) that react with the aldehydes and/or ketones of the lower molecular weight component such that the corrosion inhibiting composition is stable in bulk form and in aqueous fluids at near-neutral pH conditions (e.g., at pH conditions in the range of 6.0 to 8.0). However, when the corrosion inhibiting composition is part of an aqueous acidic fluid having a pH less than or equal to 1, the aldehydes and/or ketones of the lower molecular weight component are regenerated and separated from the higher molecular weight component (preferably by acid catalyzed hydrolysis of the higher molecular weight component) and released into the aqueous acidic fluid. When released into the aqueous acidic fluid, the aldehydes and/or ketones can function chemically to inhibit corrosion on metal surfaces contacted by the aqueous acidic fluid.

Furthermore, in formulating the corrosion inhibiting composition, the functional side groups (such as hydroxyl groups or primary or secondary amine groups or amide groups) of the higher molecular weight component can react to the aldehydes and/or ketones of the lower molecular weight component such that most or all of the molecules of the aldehydes and/or ketones of the lower molecular weight component are chemically attached to the higher molecular weight component. This reduces or eliminates "free" toxic aldehyde and/or ketone molecules in the corrosion inhibitor composition, which can reduce the emission of toxic vapors of the aldehydes and/or ketones of the lower molecular weight component into the atmosphere and in an aqueous environment. This is achieved by chemical coupling of the highly reactive and toxic aldehydes and/or ketones with the higher molecular weight component. The role of higher molecular weight components in this process is important, since the high molecular weight component can have low volatility under ambient atmospheric conditions. Furthermore, hydrolytic stability of the corrosion inhibiting composition in aqueous solutions at near neutral pH can retard the release of toxic aldehydes and/or ketones of the lower molecular weight component into the aqueous environment.

Examples of suitable alpha, beta-unsaturated aldehydes that can be utilized as part or all of the lower molecular component in accordance with the present disclosure include, but are not limited to: cinnamaldehyde and its derivatives, including dicinnamaldehyde, p-hydroxycinnamaldehyde, p-methylcinnamaldehyde, p-ethylcinnamaldehyde, p-methoxycinnamaldehyde, p-dimethylaminocinnamaldehyde, p-diethylaminocinnamaldehyde, p-nitrocinnamaldehyde, o-nitrocinnamaldehyde, o-allyloxycinnamaldehyde, 4-(3-propenal)cinnamaldehyde, p-sodium sulfocinnamaldehyde, p-trimethylammoniumcinnarnaldehyde sulfate, p-trimethylammoniumcinnamaldehyde o-methylsulfate, p-thiocyanocinnamaldehyde, p-(S-acetyl)thiocinnamaldehyde, p-(S-N,N-dimethylcarbamoylthio)cinnamaldehyde, p-chlorocinnamaldehydecrotonaldehyde; crotonaldehyde; acrolein; and/or combinations thereof.

Examples of suitable alpha, beta-unsaturated ketones that can be utilized as part or all of the lower molecular component in accordance with the present disclosure include, but are not limited to: phenyl ketones, phenones, α-alkenylphenones and α-hydroxyalkenylphenones, and/or combinations thereof.

Also, other aldehydes and ketones which regenerate under aqueous acidic conditions can be used as the low molecular component in accordance with the present disclosure.

In embodiments, the higher molecular weight component can have a molecular weight between 500 and 10⁶, preferably between 500 and 10000 and comprise backbones that can be either linear or ladder or cyclic or branched.

In embodiments, the higher molecular weight component can include, but is not limited to, various water-soluble polymers and oligomers containing one or more functional side groups (such as hydroxyl groups or primary or secondary amine groups or amide groups). The various water-soluble polymers and oligomers containing one or more functional side groups can be formulated to react with the aldehydes and/or ketones of the lower molecular weight component to provide a reaction product that is chemically stable in in bulk form and in near neutral pH aqueous solutions. However, when the reaction product is in an aqueous acidic fluid

(i.e., with a pH of ≤ 1), the aldehydes and/or ketones of the lower molecular weight component regenerate and separate from the higher molecular weight component.

In embodiments, the regeneration of the aldehydes and/or ketones of the lower molecular weight component and the separation of the aldehydes and/or ketones of the lower molecular weight component from the higher molecular weight component can occur through acid catalyzed hydrolysis of the higher molecular weight component. Acid catalyzed hydrolysis is a hydrolysis process in which a protic acid is used to catalyze the cleavage of a chemical bond via a nucleophilic substitution reaction, with the addition of the elements of water (H₂O).

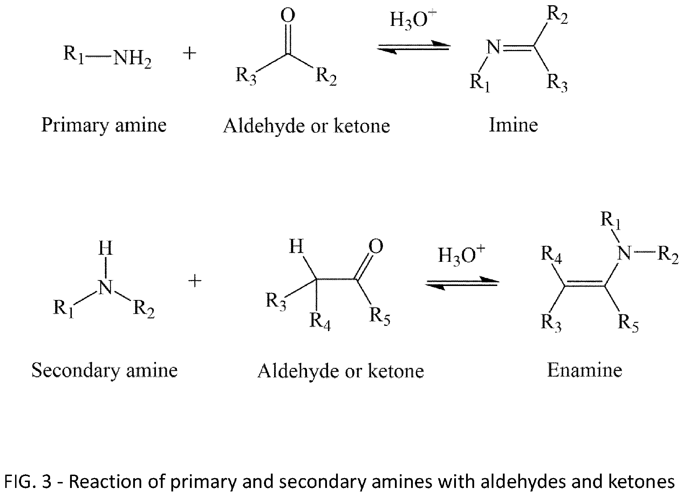

FIG. 3 illustrates an example reaction product of an aldehyde or ketone (lower molecular weight component) and a higher molecular weight component with a primary and secondary amine functional side group. This reaction product can include imine derivatives, also known as Schiff bases (compounds with a C=N function), formed by the reaction of aldehydes and ketones with primary amines. This reaction product can also include enamine formed by the reaction of aldehydes and ketones with secondary amines. The reaction product shown in FIG. 3 is acid-catalyzed and reversible. This reaction product (imine and enamine) is chemically stable in bulk form and in a near neutral pH aqueous solution but can be hydrolyzed back and regenerates the aldehyde (the lower molecular weight component) and separates the aldehyde in an aqueous acidic fluid (i.e., with a pH of ≤ 1).

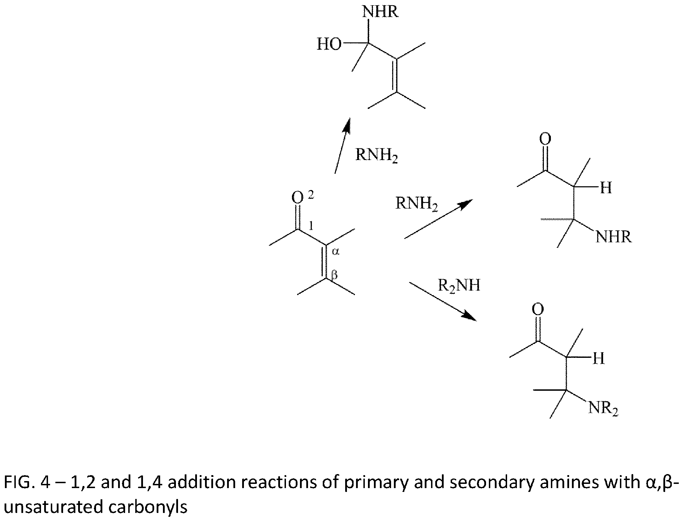

FIG. 4 illustrates an example reaction product of a ketone (lower molecular weight component) and a higher molecular weight component with a primary and secondary amine functional side group. In 1,4-addition, the nucleophile is added to the β carbon of the carbonyl, while the hydrogen is added to the α carbon of the carbonyl. In contrast, 1,4-addition reactions for both primary and secondary amines add to α,β-unsaturated aldehydes and ketones to give β-aminoaldehydes and ketones rather than the alternative imines. Whether 1,2- or 1,4-addition takes place depends on several variables but is mostly determined by the nature of the nucleophile. When a nucleophile is added, there is competition between 1,2- and 1,4-addition products. Since 1,2 additions to the carbonyl group are fast, a predominance of 1,2 products is expected from these reactions. The 1,2 addition is usually reversible and the product can be hydrolysed at pH ≤ 1 if the nucleophile is a weak base such as amines. The product formed by the 1,4-addition mechanism (β-aminoaldehydes and ketones) has a stable carbonyl group and will be more resistant in low pH environments.

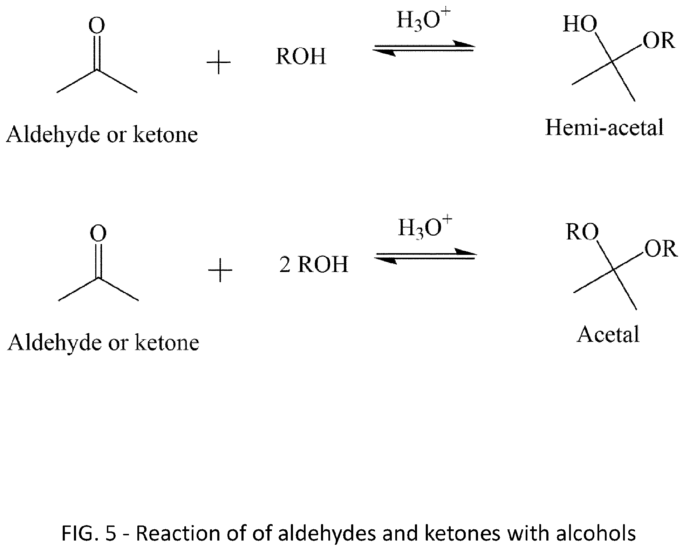

FIG. 5 illustrates an example reaction product of a ketone and aldehyde (lower molecular weight component) and a higher molecular weight component (e.g., polymer) with a primary hydroxyl functional side group. This reaction product can include acetals/ketals and aldehyde/ketone derivatives formed by a nucleophilic addition reaction between a carbonyl group and two equivalents of alcohol and removal of water. This reaction product is chemically stable in bulk form and in a near neutral pH aqueous solutions but regenerates the ketone or aldehyde of the lower molecular weight component and separates the ketone or aldehyde of the lower molecular weight component from the higher molecular weight component in an aqueous acidic fluid (i.e., with a pH of ≤ 1). Acetal hydrolysis follows first order kinetics, which means that hydrolysis is expected to accelerate with each unit decrease in pH.

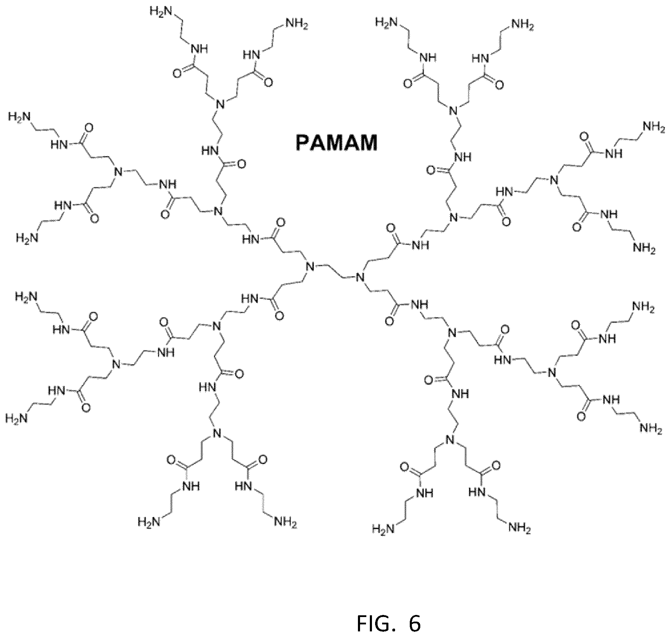

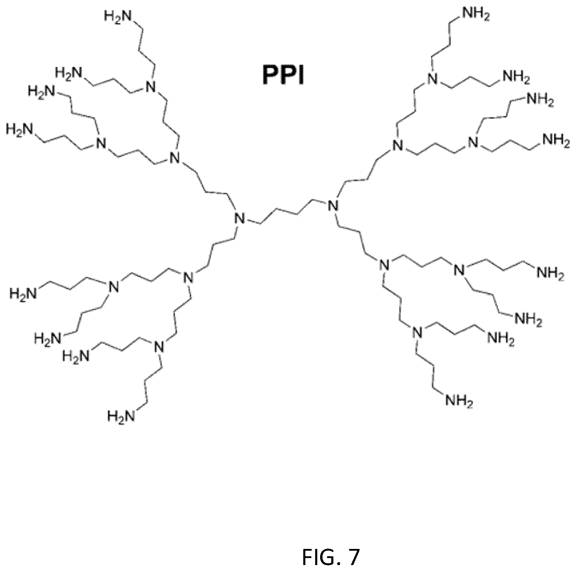

In embodiments, the higher molecular weight component can include, but is not limited to, various dendrimers of different generations (G=0-10) containing functional side groups such as hydroxyl, or primary and/or secondary amine groups. The dendrimers are described in Tomalia D.A., Fre'chet J.M.J., "Discovery of dendrimers and dendritic polymers: a brief historical perspective," J. Polym. Sci. Part A: Polym. Chem. 2002, 40, 2719-2728. Dendrimers include poly(amido amine) (PAMAM) and poly(propylene imine) (PPI). The structure of the PAMAM dendrimer is shown in FIG. 6, and the structure of the PPI dendrimer is shown in FIG. 7. An advantage of these dendrimers structures is their highly controlled and generally lower molecular weight and uniform architecture.

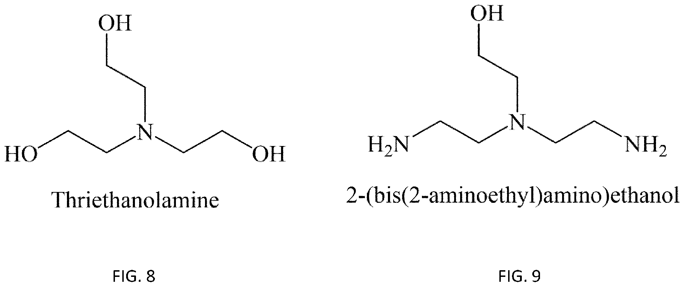

In embodiments, the higher molecular weight component can include, but is not limited to, various trimers containing functional side groups such as hydroxyl, and amine groups, for example, commercially available 2-[bis(2-aminoethyl)amino]ethanol and thriethanolamine. The structure of the thriethanolamine trimer is shown in FIG. 8, and the structure of the 2-[bis(2-aminoethyl)amino]ethanol trimer is shown in FIG. 9.

The reaction products as described herein can be prepared using any technique known in the art. For instance, as one example, the constituents as described herein may be mixed in a suitable solvent and heated as appropriate for the reaction to occur. In embodiments, the solvents can include methanol, ethanol, isopropanol, 2-butoxyethanol, di(propylene glycol) methyl ether, di(propylene glycol)propyl ether, or combinations thereof.

A corrosion inhibitor composition can be formulated using one or more reaction products as described herein. In embodiments, the percentage of the reaction product(s) in the corrosion inhibitor composition formed therefrom can vary over a wide range. In some embodiments, the percentage of the reaction product(s) in the corrosion inhibitor composition formed therefrom can range between about 10% and about 60% by weight of the corrosion inhibitor composition.

In addition to the foregoing, the corrosion inhibition composition of the present disclosure can include additional components as well. Optional additional components can include, for example, base fluids or dispersing agents (such as water or aqueous fluids), intensifiers, sources of copper ions, sources of iodide ions, aromatic hydrocarbons having high oil wetting characteristics, solvents, surfactants control agents, foaming agents, anti-sludge agents, gelling agents, clay stabilizers, viscosifiers, wetting agents, oxygen scavengers, stabilizers, scale inhibitors, salts, pH control additives, friction reducers, other biocides, sulfide scavengers, buffers, fluid-loss additives, catalysts, clay control agents, antifoam agents, flocculants, carbon dioxide scavengers, oxidizers, breakers, breaker aids, water clarifiers, asphaltene inhibitors, paraffin inhibitors, relative permeability modifiers, particulates, and the like. Such additives can broaden the utility of the corrosion inhibiting compositions, enhance the effectiveness of the compositions and/or facilitate the use thereof. In some embodiments, the corrosion inhibitor compositions of the present disclosure can be combined with one or more other corrosion inhibitors that are chemically compatible with those of the present disclosure.

The corrosion inhibitor composition may be prepared or mixed using any technique known in the art. For instance, as one example, the constituents of the corrosion inhibitor composition may be mixed simultaneously with one another.

The corrosion inhibitor composition may be employed for treatment using various techniques. In matrix-acidizing treatments, in general, an aqueous acidic fluid can be employed for the acid stimulation. The aqueous acidic fluid may include, but is not limited to, hydrochloric acid, hydrofluoric acid, acetic acid, formic acid, or other organic acids and anhydrides, and mixtures thereof. In addition, these acids may be presented as aqueous acidic solutions comprising water. The aqueous acidic fluid may include any other acids also known to those of skill in the art.

In embodiments, the corrosion inhibitor composition may be employed for inhibiting corrosion on a metal surface. The metal surface may be a steel surface. The steel surface may include carbon steel, alloy steel such as stainless steel, and tool steel. The carbon steel may include low carbon, medium carbon, high carbon, and very high carbon steel as generally defined in the art. The alloy steel may include austenitic steel, ferritic steel, and martensitic steel. The alloy steel may include those with silicon, nickel, titanium, copper, manganese, chromium, and aluminum in varying proportions. The tool steel may include tungsten, molybdenum, cobalt, and vanadium in varying proportions. The metal surface may include other metals or alloys comprising aluminum, steel, stainless steel, brass, bronze, carbon steel, copper, ferrous materials, iron, magnesium, nickel, titanium, or zinc, or a combination thereof. The metal surface can be part of a casing, tubular or process equipment deployed in oilfield applications or other industrial applications.

Without intending to be limited by theory, the corrosion inhibitor composition may be applied or contacted to, or coated on, the metal surface and form a layer or film on the metal surface to prevent or inhibit the acid of the acidizing treatment or other corrosive agents, such as hydrogen sulfide, from corroding the metal surface.

In this regard, the present disclosure is also directed to a method of inhibiting corrosion on a metal surface. The method comprises contacting metal surface with a corrosion inhibitor composition as disclosed herein.

The present disclosure is also directed to a method of forming a treatment fluid by combining or mixing a corrosion inhibitor composition as described herein with an aqueous acid fluid (i.e., with a pH of ≤ 1). The amount of corrosion inhibitor composition combined or mixed with the aqueous acid fluid can be configured to provide protection against or inhibit corrosion. However, it should be understood that the amount of the corrosion inhibitor composition varies depending on the system in which the ingredients are used. For instance, the concentration may depend on the temperature of the well, the exposure time to the treatment fluid, the type of acid, the type of formation, the depth of the formation, the type of surface, etc. Methods for monitoring corrosion are well known in the art thereby allowing one to adjust the concentration of the corrosion inhibitor composition.

The treatment fluid may have utility during acidizing treatments for hydrocarbon wells (e.g., oil and gas wells) as well as non-hydrocarbon wells (such as water wells and geothermal wells). In these applications, the corrosion inhibitor composition may provide corrosion inhibition to equipment including casings, tubing, and other well components such as wellhead fittings, connections, meters, storage tanks, flow lines, etc.

While acidizing treatments and acid stimulation are mentioned, it should be noted that the corrosion inhibitor composition may have other uses. For instance, the corrosion inhibitor composition may have applications relating to the production, transportation, storage, and separation of oil and gas. Additionally, the corrosion inhibitor composition may be employed for other processes such as pickling a tubular, cleaning a wellbore, acid tunneling, drilling mud removal, and scale treatment.

Further, the corrosion inhibitor composition may also be used in other industrial settings to inhibit corrosion of tanks, process lines, pumps, heaters, boilers, cooling towers, and other industrial equipment.

**In** order to further illustrate the corrosion inhibiting methods and compositions of the present invention, the following examples are given.

### EXAMPLES

The examples describes the synthesis of a reaction product according to the present disclosure and hydrolysis of the reaction product in different aqueous solutions.

### Example 1: Synthesis of example polymeric reaction product

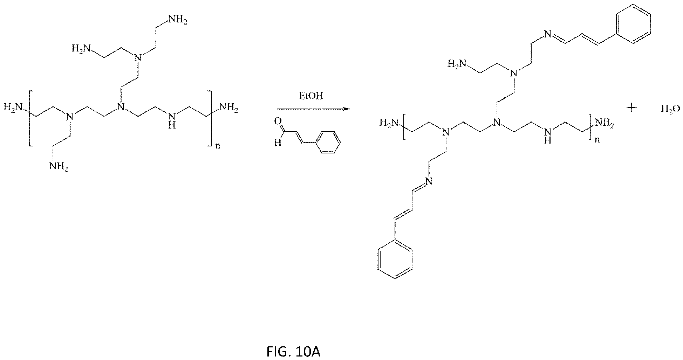

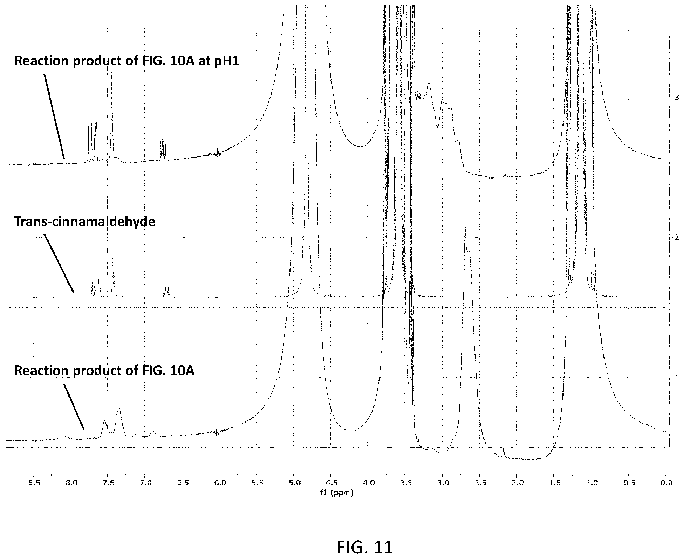

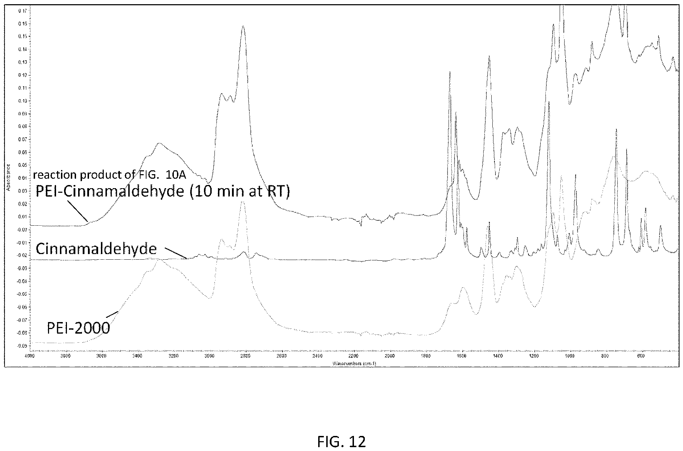

One (1) gram Poly(ethylenimine)-2000 (i.e., higher molecular weight component with primary amine functional side group), containing 50 wt. % of water, was dissolved in two (2) grams of ethanol. 0.65 grams of Trans-cinnamaldehyde (lower molecular weight component) was added to the mixture. The resulting mixture was stirred at 50°C for one (1) hour and stored at room temperature. The reaction generated a polymeric reaction product as shown in FIG. 10A. The reaction product was a viscous yellow liquid and used for testing without purification. Given that the composition of poly(ethyleneimine) is more complex than shown in FIG 10A, it is quite difficult to make estimates of the degree of modification of the polymer by amine and to achieve high degrees of modification it is necessary to use an excess of low molecular weight amine, which in turn requires the use of additional purification of the polymer by fractional precipitation methods, which is not always practical and economically justified. Typically, poly(ethyleneimine) is a polymer with repeating units consisting of the amine group and two aliphatic CH₂CH₂ carbon spacers. Linear poly(ethyleneimines) contains all secondary amines, unlike branched polymers which contain primary, secondary and tertiary amino groups. ¹H NMR spectroscopy and FTIR were used for polymer characterization. In FIG. 11, the curve labeled "reaction product of FIG. 10A" (curve 1) is a plot of ¹H NMR data of the polymeric reaction product that shows that the polymeric reaction product has no residual trans-cinnamaldehyde species. Specifically, the NMR signal at 9.52 ppm assigned to the proton of the aldehyde group completely disappears in the polymeric reaction product. In FIG. 12, the plot of FTIR data of the polymeric reaction product of example 1 shows the characteristic band 1634 v(C=N) typical for Schiff-base compounds. The polymeric reaction product of example 1 is soluble in common organic solvents such as methanol, ethanol, isopropanol, THF, chloroform and dichloromethane.

### Example 2: Hydrolytic stability of the polymeric reaction product of example 1 in aqueous solution.

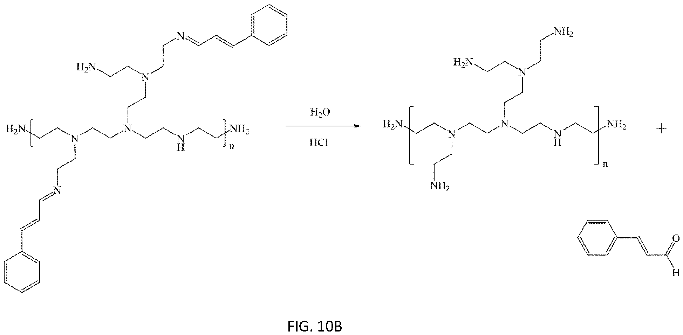

The hydrolysis of the polymeric reaction product of example 1 was studied in water solutions at different pH levels at room temperature in order to gain basic information concerning the effect of pH on the stability of the polymeric reaction product of example 1 in aqueous solutions.. The results demonstrate high stability of the polymeric reaction product of example 1 in water at pH 6.0 - 9.0 for at least 24 hours at 20°C. However, the polymeric reaction product of example 1 is fully hydrolyzed in water at a pH≤1 within 1 min. In FIG. 11, the top (curve 3) is proton NMR data of the polymeric reaction product of example 1 in an aqueous solution at pH of 1. This curve 3 represents a superposition of chemical signals belonging to parent compounds poly(ethylenimine) and trans-cinnamaldehyde (curve 2). This suggests that the polymeric reaction product of example 1 has undergone a complete hydrolysis in the aqueous acidic solution at a pH≤1. The acid hydrolysis regenerates the cinnamaldehyde of the lower molecular weight component and separates the cinnamaldehyde of the lower molecular weight component from the higher molecular weight component in the aqueous acidic fluid (i.e., with a pH of ≤ 1) as shown schematically in FIG. 10B. Indeed, the bright yellow color of the polymeric reaction product of example 1 vanishes almost instantaneously upon exposure to acid, and its hydrolysis products are colorless.

The corrosion inhibitor compositions as described herein can provide an improved environmental footprint due to i) lack of "free" toxic (or environmentally hazardous) aldehydes and/or ketones in the corrosion inhibitor composition, because all aldehyde and/or ketone molecules are chemically attached to the higher molecular weight component in near-neutral pH conditions (e.g., at pH conditions in the range of 6.0 to 8.0), and ii) hydrolytic stability of the corrosion inhibitor compositions in near-neutral pH conditions (e.g., at pH conditions in the range of 6.0 to 8.0). The corrosion inhibitor compositions as described herein can also have reduced toxicity and volatility that is achieved through the formation of polymer intermediates, which can reduce the risk of hazardous substances to personnel during storage and formulation preparation in the field.

These factors reduce the emission of toxic vapors of lower molecular weight aldehydes and/or ketones into the atmosphere, and into the aqueous environment. This is achieved by chemical coupling of the highly reactive and toxic aldehyde and/or ketone substances with the higher molecular weight component. The role of higher molecular weight components in this process is important since the higher molecular weight component will have low volatility under ambient atmospheric conditions. Hydrolytic stability of the resulting corrosion inhibitor composition in an aqueous solution at near neutral pH retards the release of toxic aldehydes and/or ketones into the aqueous environment.

Furthermore, when the corrosion inhibitor composition is introduced into the acidic environment to be protected (i.e., an aqueous acidic fluid having a pH ≤ 1), the active lower molecular weight component of corrosion inhibitor composition (i.e., lower molecular weight aldehydes and/or ketones) is quickly released from the composition (for example, due to acid catalyzed hydrolysis of the higher molecular weight component). For example, the reaction product of the trans-cinnamaldehyde and poly(ethylenimine) of example 1 is completely hydrolyzed at room temperature within a few minutes in an aqueous acidic fluid having a pH ≤1 (example 2).

There have been described and illustrated herein several embodiments of the corrosion inhibitor compositions and methods of inhibiting corrosions. While particular embodiments of the invention have been described, it is not intended that the invention be limited thereto, as it is intended that the invention be as broad in scope as the art will allow and that the specification be read likewise. It will therefore be appreciated by those skilled in the art that yet other modifications could be made to the provided invention without deviating from its spirit and scope as claimed.

Although only a few example embodiments have been described in detail above, those skilled in the art will readily appreciate that many modifications are possible in the example embodiments without materially departing from this invention. Accordingly, all such modifications are intended to be included within the scope of this disclosure as defined in the following claims. In the claims, means-plus-function clauses are intended to cover the structures described herein as performing the recited function and not only structural equivalents, but also equivalent structures. Thus, although a nail and a screw may not be structural equivalents in that a nail employs a cylindrical surface to secure wooden parts together, whereas a screw employs a helical surface, in the environment of fastening wooden parts, a nail and a screw may be equivalent structures. It is the express intention of the applicant not to invoke 35 U.S.C. § 112, paragraph 6 for any limitations of any of the claims herein, except for those in which the claim expressly uses the words 'means for' together with an associated function.

## Claims

1. A corrosion inhibiting composition comprising:
a reaction product of a lower molecular weight component and a higher molecular weight component, wherein the lower molecular weight component includes at least one aldehyde or ketone or mixture thereof, and wherein the higher molecular weight component has at least one functional side group that reacts with the at least one aldehyde or ketone or mixture thereof such that the corrosion inhibiting composition is stable in bulk form and in aqueous fluids at near-neutral pH conditions, and wherein the at least one aldehyde or ketone or mixture thereof is regenerated and separated from the higher molecular weight component when the corrosion inhibiting composition is part of an aqueous acidic fluid having a pH less than or equal to 1.

2. A corrosion inhibiting composition according to claim 1, wherein:
the lower molecular weight component includes at least one alpha, beta-unsaturated aldehyde or at least one alpha, beta-unsaturated ketone or mixtures thereof.

3. A corrosion inhibiting composition according to claim 1 or 2, wherein:
the at least one functional side group of the higher molecular weight component is selected from the group consisting of hydroxyl group, primary amine group, secondary amine group, primary amide group, or secondary amide group.

4. A corrosion inhibiting composition according to any one of the preceding claims, wherein:
the near-neutral pH conditions comprise pH conditions in the range of 6.0 to 8.0.

5. A corrosion inhibiting composition according to any one of the preceding claims, wherein:
the at least one aldehyde or ketone or mixture thereof is regenerated and separated from the higher molecular weight component by acid catalyzed hydrolysis of the higher molecular weight component, and/or wherein:
the at least one aldehyde or ketone or mixture thereof is releasable into the aqueous acidic fluid such that the at least one aldehyde or ketone or mixture thereof function chemically to inhibit corrosion on metal surfaces contacted by the aqueous acidic fluid.

6. A corrosion inhibiting composition according to any one of the preceding claims, wherein:
the higher molecular weight component has a molecular weight between 500 and 10⁶ (preferably between 500 and 10000) and comprise backbones that can be either linear or ladder or cyclic or branched, and/or wherein:
the higher molecular weight component comprises a water-soluble polymer or oligomer, and/or wherein:
the higher molecular weight component comprises at least one dendrimer, wherein preferably:
the at least one dendrimer includes at least one of poly(amido amine) (PAMAM), poly(propylene imine) (PPI), or combinations thereof , and/or wherein:
the higher molecular weight component comprises at least one trimer, wherein preferably:
the at least one trimer includes at least one of 2-[bis(2-aminoethyl)amino]ethanol, thriethanolamine, or combinations thereof.

7. A corrosion inhibiting composition according to any one of the preceding claims, further comprising:
a solvent, wherein preferably:
the solvent includes methanol, ethanol, isopropanol, 2-butoxyethanol, di(propylene glycol) methyl ether, di(propylene glycol)propyl ether, or combinations thereof.

8. A corrosion inhibiting composition according to any one of the preceding claims, wherein:
the higher molecular weight component comprises poly(ethylenimine).

9. A corrosion inhibiting composition according to any one of the preceding claims, wherein:
the lower molecular weight component comprises cinnamaldehyde.

10. A corrosion inhibiting composition according to claim 9, wherein:
the lower molecular weight component comprises trans-cinnamaldehyde.

11. A method of forming a treatment fluid this is transported through a well, the method comprising:
adding the composition of any one of the preceding claims to an aqueous acidic fluid having a pH less than or equal to 1.

12. A method according to claim 11, wherein:
the composition of any one of the claims 1 - 10 inhibits corrosion of metal surfaces contacted by the treatment fluid.

13. A method of inhibiting corrosion in a well that transports aqueous acidic fluid, the method comprising:
forming or providing a treatment fluid that combines the composition of any one of the claims 1 - 10 and an aqueous acidic fluid having a pH less than or equal to 1; and
introducing the treatment fluid into the well.

14. A method according to claim 13, wherein:
the composition of any one of the claims 1 - 10 inhibits corrosion of metal surfaces contacted by the treatment fluid.

15. A method according to claim 13 or 14, wherein:
the well comprises an oil well, a gas well, a water well, or a geothermal well.
